(19) Europäisches Patentamt
European Patent Office
Office européen des brevets

(11) EP 3 889 980 A1

(12) EUROPEAN PATENT APPLICATION

(43) Date of publication:
**06.10.2021 Bulletin 2021/40**

(21) Application number: **20167784.6**

(22) Date of filing: **02.04.2020**

(51) Int Cl.:
***H01G 9/00*** *(2006.01)* ***H01G 9/028*** *(2006.01)*
***H01G 9/035*** *(2006.01)* ***H01G 9/15*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Heraeus Deutschland GmbH & Co KG**
**63450 Hanau (DE)**

(72) Inventor: **Merker, Udo**
**63450 Hanau (DE)**

(74) Representative: **Herzog IP Patentanwalts GmbH**
**Steinstraße 16-18**
**40212 Düsseldorf (DE)**

(54) **PROCESS FOR PRODUCING POLYMER CAPACITORS FOR HIGH RELIABILITY APPLICATIONS**

(57) The present invention relates to a method for manufacturing a capacitor, comprising the method steps:
a) provision of a porous electrode body (1) made of an electrode material (2), wherein a dielectric (3) at least partially covers a surface of this electrode material (2);
b) introduction of a liquid composition which comprises an electrically conductive polymer, at least one high-boiling solvent having a boiling point (determined at 1013.25 hPa) of at least 150°C and of not more than 275°C and optionally a dispersing agent into at least a part of the porous electrode body (1) provided in process step a) and at least partial removal of the high-boiling solvent and, if present, of the dispersing agent for the formation of a solid electrolyte (4) that at least partially covers a surface of the dielectric (3);
c) filling at least a part of the pores of the porous electrode body (1) obtained in process step b) with an impregnation solution (6) comprising at least one impregnation solvent, wherein the at least one impregnation solvent comprises at least one hydroxy group and has a molecular weight in the range from 70 to 180 g/mol;
d) encapsulation of the porous electrode body (1) obtained in process step c).

The invention also relates to capacitor manufactured with this method, the use of an electrolytic capacitor and electronic circuits.

Fig. 1

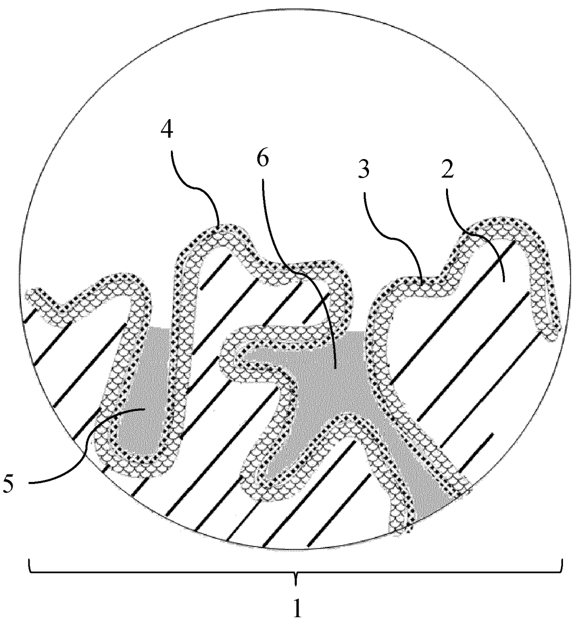


EP 3 889 980 A1

## Description

The present invention relates to a method for manufacturing a capacitor, and a capacitor manufactured with this method, the use of this capacitor, and electronic circuits.

A standard electrolytic capacitor generally consists of a porous metal electrode, an oxide layer disposed on the metallic surface, an electrically conductive material, generally a solid, which is introduced into the porous structure, an external electrode (contact), such as a silver layer, and other electrical contacts and an encapsulation. One frequently used electrolytic capacitor is the tantalum electrolytic capacitor, of which the anode electrode is made from the valve metal tantalum, on which a uniform, dielectric layer of tantalum pentoxide has been produced through anodic oxidation (also referred to as *"forming"*). A liquid or solid electrolyte forms the cathode of the capacitor. Aluminium capacitors, of which the anode electrode is made from the valve metal aluminium, on which a uniform, electrically insulating aluminium oxide layer is produced as a dielectric by means of anodic oxidation, are also frequently used. Here also, a liquid electrolyte or a solid electrolyte form the cathode of the capacitor. The aluminium capacitors are generally embodied as wound capacitors or stack-type capacitors.

In view of their high electrical conductivity, $\pi$-conjugated polymers are particularly suitable as solid electrolytes in the capacitors described above. $\pi$-conjugated polymers are also referred to as conductive polymers or as synthetic metals. They are gaining increasing commercial significance because, by comparison with metals, polymers have advantages with regard to processing, weight and the selective adjustment of properties through chemical modification. Examples of known $\pi$-conjugated polymers include polypyrroles, polythiophenes, polyanilines, polyacetylenes, polyphenylenes and poly(p-phenylene-vinylenes), wherein poly(3,4-ethylenedioxythiophene) (PEDOT) is a particularly important polythiophene which is used technically, because it has a very high conductivity in its oxidised form.

In the prior art, alternative methods for manufacturing solid electrolytes based on conductive polymers in electrolytic capacitors have therefore been developed. For example, DE-A-10 2005 043828 describes a method for manufacturing solid electrolytes in capacitors, in which a dispersion comprising the already polymerised thiophene, for example, the PEDOT/PSS dispersions known from the prior art, is applied to the oxide layer, and then the dispersion medium is removed by evaporation. However, there is a requirement to increase further the breakdown voltage, which is a measure for the reliability of an electrolytic capacitor, especially for high operating voltages. The breakdown voltage is the voltage at which the dielectric (oxide layer) of the capacitor no longer withstands the electrical field strength and electrical breakdowns occur between the anode and the cathode, which leads to a short circuit in the capacitor. The higher the breakdown voltage is, the better the quality of the dielectric and therefore also the more reliable the capacitor is. Moreover, the higher the breakdown voltage of the capacitor is, the higher the rated voltage at which the capacitor can be used is.

An increase of the breakdown voltage can be achieved in aluminium capacitors according to the doctrine of WO-A-2007/097364, JP 2008-109065, JP 2008-109068 or JP 2008-109069, for example, by adding ion-conducting substances, such as polyethylene glycols to the polymer dispersions which are used to manufacture the solid electrolyte layer before the application of the dispersion to the oxide layer. The disadvantage of this approach, however, is that, although the breakdown voltage of the capacitor can be improved, this improvement is associated with an undesirably strong decline in the capacitance of the capacitor at low temperatures, which makes such capacitors unusable in the automotive industry. This loss in capacitance is most severe for application voltages below 100 V which are mainly used for electronics.

In addition to the addition of polyethylene glycols to the polymer dispersion, in the context of so-called *"hybrid capacitors",* which provide a combination of a solid electrolyte and a liquid electrolyte, it is also known, for example, from US 7,497,879 B2 or JP 2009-111174, to impregnate the solid electrolytes, after they have been applied to the oxide layer, with a solution comprising $\gamma$-butyrolactone or sulfolane, in order to increase the capacitance yield and accordingly reduce the residual current in this manner. Such capacitors also show an undesirably large reduction in the capacitance at low temperatures. Furthermore, the components used in US 7,497,879 B2 or JP 2009-111174 volatilise on increasing the temperature of the capacitor, which can occur with normal use in a component or during the manufacturing process of the capacitor, which leads to a drying-out of such a hybrid capacitor.

The present invention was based on the object of overcoming the disadvantages resulting from the prior art in connection with capacitors, especially in connection with solid electrolytic capacitors, particularly preferably in connection with the aluminium capacitors known from the prior art.

In particular, the present invention was based on the object of providing a method for manufacturing a capacitor, by means of which capacitors can be manufactured, which have at the same time, as a small reduction of capacitance at low temperatures and a sufficiently high long-term stability at high temperatures, in order in this manner to comply with important requirements in the electrical industry, particularly in the automotive industry.

The manufacturing method for the advantageous capacitors described above should also be further distinguished in that it allows the manufacture of these capacitors in the simplest possible manner, in particular with the fewest possible method steps.

A contribution to at least partly solving at least one, preferably more than one, of the above objects is made by

the independent claims. The dependent claims provide preferred embodiments which contribute to at least partly solving at least one of the objects.

A contribution to solving at least one of the objects according to the invention is made by an embodiment 1 of a method for manufacturing a capacitor, preferably an electrolytic capacitor, comprising the following method steps:

a) provision of a porous electrode body made of an electrode material, wherein a dielectric at least partially covers a surface of this electrode material;

b) introduction of a liquid composition, preferably a liquid composition in the form of a dispersion or solution, more preferably a liquid composition in the form of a dispersion, which comprises an electrically conductive polymer, at least one high-boiling solvent having a boiling point (determined at 1013.25 hPa) of at least 150°C and of not more than 275°C and optionally a dispersing agent, preferably water, into at least a part of the porous electrode body provided in process step a) and at least partial removal of the high-boiling solvent and, if present, of the dispersing agent for the formation of a solid electrolyte that at least partially covers a surface of the dielectric;

c) filling at least a part of the pores of the porous electrode body obtained in process step b) with an impregnation solution comprising at least one impregnation solvent, wherein the at least one impregnation solvent comprises at least one hydroxy group and has a molecular weight in the range from 70 to 180 g/mol;

d) encapsulation of the porous electrode body obtained in process step c).

The liquid compositions used in process step b) can be present in the form of a solution or a dispersion. However, the transitions here can be fluid. For that reason, no distinction is made hereafter between the terms "dispersed" and "dissolved". Likewise, no distinction is made between "dispersion" and "solution" or between "dispersing agent" and "solvent". Rather these terms are used synonymously hereafter.

In an embodiment 2 of the method according to the invention, the method is designed according to its embodiment 1, wherein the electrode material is aluminium and wherein the dielectric is aluminium oxide, preferably $Al_2O_3$.

In an embodiment 3 of the method according to the invention, the method is designed according to its embodiment 1 or 2, wherein the liquid composition, preferably the dispersion, comprises particles of the electrically conductive polymer.

In an embodiment 4 of the method according to the invention, the method is designed according to anyone of its embodiments 1 to 3, wherein the electrically conductive polymer comprises at least one polymer selected from the group consisting of a polythiophene, a polypyrrole, a polyaniline and a mixture of at least two thereof.

In an embodiment 5 of the method according to the invention, the method is designed according to its embodiment 4, wherein the electrically conductive polymer is poly(3,4-ethylenedioxythiophene) or a derivative thereof.

In an embodiment 6 of the method according to the invention, the method is designed according to anyone of its embodiments 1 to 5, wherein the liquid composition, preferably the dispersion, additionally comprises at least one polymeric anion.

In an embodiment 7 of the method according to the invention, the method is designed according to its embodiment 6, wherein the polymeric anion is polystyrene sulfonic acid or a derivative thereof.

In an embodiment 8 of the method according to the invention, the method is designed according to anyone of its embodiments 1 to 7, wherein the at least one high-boiling solvent has a molecular weight of less than 180 g/mol, preferably less than 150 g/mol and more preferably less than 120 g/mol.

In an embodiment 9 of the method according to the invention, the method is designed according to anyone of its embodiments 1 to 8, wherein the at least one high-boiling solvent has a boiling point (determined at 1013.25 hPa) of less than 250°C.

In an embodiment 10 of the method according to the invention, the method is designed according to anyone of its embodiments 1 to 9, wherein the liquid composition, preferably the dispersion, comprises a mixture of at least two of the high-boiling solvents.

In an embodiment 11 of the method according to the invention, the method is designed according to anyone of its embodiments 1 to 10, wherein the liquid composition, preferably the dispersion, comprises the electrically conductive polymer and the at least one high-boiling solvent in an amount conductive polymer (preferably PEDOT) : high-boiling solvent in the range from 1 : 1 to 1 : 100, , preferably in the range from 1 : 3 to 1 : 50 and more preferably in the range from in the range from 1 : 8 to 1 : 25.

In an embodiment 12 of the method according to the invention, the method is designed according to anyone of its embodiments 1 to 11, wherein the liquid composition, preferably the dispersion, has a pH-value (determined at 25°C) in the range from 2.5 to 8.0, preferably in the range from 2.5 to 7 and more preferably in the range from 3 to 6.

In an embodiment 13 of the method according to the invention, the method is designed according to anyone

of its embodiments 1 to 12, wherein in process step b) at least 50 wt.-%, more preferably at least 75 wt.-% and even more preferably at least 90 wt.-% of the total amount of the high-boiling solvent is at least partially removed when forming the solid electrolyte. In a particularly preferred embodiment of the process according to the present invention the high-boiling solvent is completely removed when forming the solid electrolyte.

In an embodiment 14 of the method according to the invention, the method is designed according to anyone of its embodiments 1 to 13, wherein before performing process step d) at least 50 vol-%, more preferably at least 75 vol-% and even more preferably at least 90 vol-% of the open pore volume of the porous electrode body obtained in process step b) are filled with the at least one impregnation solvent.

In an embodiment 15 of the method according to the invention, the method is designed according to anyone of its embodiments 1 to 14, wherein the impregnation solution has a ionic conductivity of less than 1000 μS/cm, preferably less than 100 μS/cm, even more preferably less than 10 μS/cm and most preferably less than 1 μS/cm.

In an embodiment 16 of the method according to the invention, the method is designed according to anyone of its embodiments 1 to 15, wherein the impregnation solution comprises a mixture of at least two of the impregnation solvents.

In an embodiment 17 of the method according to the invention, the method is designed according to anyone of its embodiments 1 to 16, wherein the impregnation solution comprises less than 0.5 wt.-%, preferably less than 0.1 wt.-% and even more preferably less than 0.01 wt.-% of an aromatic compound having at least one hydroxyl group, based on the total weight of the impregnation solution. In a particularly preferred embodiment of the method according to the present invention the impregnation solution is free of any aromatic compounds having at least one hydroxyl group.

In an embodiment 18 of the method according to the invention, the method is designed according to anyone of its embodiments 1 to 17, wherein the at least one impregnation solvent is a compound that comprises two hydroxy groups or is a compound that comprises one hydroxy group and one ether group, preferably one alkyl ether group.

In an embodiment 19 of the method according to the invention, the method is designed according to it embodiments 18, wherein the at least one impregnation solvent is a mono, di- or tri alkylene glycol, preferably diethylene glycol or dipropylene glycol, a mono-, di- or tri alkylene glycol monoether, preferably diethylene glycol monomethyl ether, diethylene glycol monoethyl ether or diethylene glycol monobutyl ether, an alkanediol or an alkanediol monoether, most preferably diethylene glycol or an alkanediol.

In an embodiment 20 of the method according to the invention, the method is designed according to its embodiment 19, wherein the alkanediol is selected from the group consisting of 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2-heptanediol, 1,3-heptanediol, 1,4-heptanediol, 1,5-heptanediol, 1,6-heptanediol, 1,7-heptanediol, 2,3-heptanediol, 2,4-heptanediol, 2,5-heptanediol, 2,6-heptanediol, 3,4-heptanediol, 3,5-heptanediol, 1,2-octanediol, 1,3-octanediol, 1,4-octanediol, 1,5-octanediol, 1,6-octanediol, 1,7-octanediol, 1,8-octanediol, 2,3-octanediol, 2,4-octanediol, 2,5-octanediol, 2,6-octanediol, 2,7-octanediol, 3,4-octanediol, 3,5-octanediol, 3,6-octanediol, 4,5-octanediol and any further alkanediol having a molecular weight in the range from 70 to 180 g/mol. Furthermore, suitable derivatives of the above mentioned alkanediols in which one hydrogen atom that is bonded to a carbon atom is substituted by an alkyl group, such as a methyl group or an ethyl group.

In an embodiment 21 of the method according to the invention, the method is designed according to anyone of its embodiments 1 to 20, wherein the at least one impregnation solvent has a boiling point (determined at 1013.25 hPa) of more than 205°C, preferably of more than 220°C and even more preferably of more than 240°C.

In an embodiment 22 of the method according to the invention, the method is designed according to anyone of its embodiments 1 to 21, wherein the at least one impregnation solvent has a melting point of less than 15°C, preferably of less than 5°C and even more preferably of less than -5°C.

In an embodiment 23 of the method according to the invention, the method is designed according to anyone of its embodiments 1 to 22, wherein the impregnation solution comprises the at least one impregnation solvent in an amount of at least 50 wt.-%, preferably of at least 75 wt.-%, even more preferably of at least 90 wt.-%, and most preferable of at least 95 wt.-%, in each case based on the total weight of the impregnation solution. In case of two of more impregnation solvents, these amounts represent the total amount of impregnation solvents.

In an embodiment 24 of the method according to the invention, the method is designed according to anyone of its embodiments 1 to 23, wherein the liquid composition, preferably the dispersion, the impregnation solution or the both additionally comprise a stabilizer. Preferred stabilizers are those compounds which are mentioned in WO 2012/041507 A1, wherein aromatic compounds containing at least two OH groups and one further functional group with a hetero atom which differs from carbon are particularly preferred. Examples of suitable stabilizers are 3,4,5-trihydroxybenzoic acid and derivatives thereof like 3,4,5-trihydroxybenzoic acid esters (gallic acid esters), in particular alkyl esters, alkenyl esters, cycloalkyl esters, cycloalkenyl esters, aryl esters, having preferably in each case 1 to 15 C atoms in the aryl or alkyl groups of the esters, are furthermore to be mentioned. Particularly preferred are gallic acids and gallic acids

esterified with sugars, which are often called tannin or gallotannins (cf. Römpp Chemie, 10th edition (1999), page 4391). Also suitable as stabilizers are the *"hydroxy-group-containing aromatic compounds"* that are mentioned in paragraph [0049] of EP 1 798 259 A1, the *"antioxidants"* that are mentioned in paragraph [0025] of EP 1 043 720 A1 and the *"aromatic compounds exclusive of sulfo groups and containing at least two hydroxy groups"* that are mentioned on pages 10 and 11 of WO 2008/055834 A1. In this context it is also preferred to use the stabiliser or stabilisers in a concentration in a range of from 0.1% by weight to 60% by weight, preferably in a range of from 1% by weight to 50% by weight and particularly preferably in a range of from 5% by weight to 25% by weight, based on the total weight of the impregnation solution. If the dispersion comprises the stabilizer, it is preferred to use the stabiliser or stabilisers in a concentration in a range of from 0.1% by weight to 20% by weight, preferably in a range of from 0.5% by weight to 10% by weight and particularly preferably in a range of from 1% by weight to 5% by weight based on the total weight of the dispersion.

A contribution to solving at least one of the objects according to the invention is also made by an embodiment 1 of a capacitor 1 obtainable by the method according to the present invention.

In an embodiment 2 of capacitor 1 according to the invention, the capacitor is designed according to its embodiment 1, wherein the capacitor has

($\alpha$1) a decrease of the capacitance of at most 20 %, preferably of at most 15 % and more preferably of at most 10 % on reducing the temperature from 20°C to -55°C, and
($\alpha$2) a decrease of the capacitance of at most 20 %, preferably of at most 15 % and more preferably of at most 10 % after storage of the capacitor for 1000 hours at 125°C.

In an embodiment 3 of capacitor 1 according to the invention, the capacitor is designed according to its embodiment 1 or 2, wherein the capacitor has a rated voltage of less than 100 V.

A contribution to solving at least one of the objects according to the invention is also made by an embodiment 1 of a capacitor 2 comprising as components:

i) a porous electrode body made of an electrode material, wherein a dielectric at least partially covers a surface of this electrode material;

ii) a solid electrolyte comprising an electrically conductive polymer, wherein the solid electrolyte layer at least partially covers a surface of the dielectric;

iii) an impregnation solution that fills at least a part of the open pore volume of the porous electrode body, wherein the impregnation solution has a conductivity of less than 1000 $\mu$S/cm, preferably less than 100 $\mu$S/cm, even more preferably less than 10 $\mu$S/cm and most preferably less than 1 $\mu$S/cm and comprises at least one impregnation solvent, wherein the at least one impregnation solvent comprises at least one hydroxy group and has a molecular weight in the range from 70 to 180 g/mol;

iv) an encapsulation that encloses the porous electrode body;

wherein the capacitor has

($\alpha$1) a decrease of the capacitance of at most 20 %, preferably of at most 15 % and more preferably of at most 10 % on reducing the temperature from 20°C to -55°C, and
($\alpha$2) a decrease of the capacitance of at most 20 %, preferably of at most 15 % and more preferably of at most 10 % after storage of the capacitor for 1000 hours at 125°C.

Preferred porous bodies, electrode materials, dielectrics, electrically conductive polymers and encapsulations are those which are used in the method according to the invention. It is also preferred that capacitor 2 according to the invention has the same properties as capacitor 1 according to the invention.

In an embodiment 2 of capacitor 2 according to the invention, the capacitor is designed according to its embodiment 1, wherein the capacitor has a rated voltage of less than 100 V.

In an embodiment 3 of capacitor 2 according to the invention, the capacitor is designed according to its embodiment 1 or 2, wherein the electrode material is aluminium and wherein the dielectric is aluminium oxide, preferably $Al_2O_3$.

In an embodiment 4 of capacitor 2 according to the invention, the capacitor is designed according to anyone of its embodiments 1 to 3, wherein the electrically conductive polymer comprises at least one polymer selected from the group consisting of a polythiophene, a polypyrrole, a polyaniline and a mixture of at least two thereof.

In an embodiment 5 of capacitor 2 according to the invention, the capacitor is designed according to anyone

of its embodiments 1 to 4, wherein the electrically conductive polymer is poly(3,4-ethylenedioxythiophene) or derivative thereof.

In an embodiment 6 of capacitor 2 according to the invention, the capacitor is designed according to anyone of its embodiments 1 to 5, wherein the solid electrolyte additionally comprises at least one polymeric anion.

In an embodiment 7 of capacitor 2 according to the invention, the capacitor is designed according to its embodiment 6, wherein the polymeric anion is polystyrene sulfonic acid or a derivative thereof.

In an embodiment 8 of capacitor 2 according to the invention, the capacitor is designed according to anyone of its embodiments 1 to 7, wherein the impregnation solution comprises a mixture of at least two of the impregnation solvents.

In an embodiment 9 of capacitor 2 according to the invention, the capacitor is designed according to anyone of its embodiments 1 to 8, wherein the impregnation solution comprises less than 0.5 wt.-%, preferably less than 0.1 wt.-% and even more preferably less than 0.01 wt.-% of an aromatic compound having at least one hydroxyl group, based on the total weight of the impregnation solution. In a particularly preferred embodiment of the method according to the present invention the impregnation solution is free of any aromatic compounds having at least one hydroxyl group.

In an embodiment 10 of capacitor 2 according to the invention, the capacitor is designed according to anyone of its embodiments 1 to 9, wherein the at least one impregnation solvent is a compound that comprises two hydroxy groups or is a compound that comprises one hydroxy group and one ether group, preferably one alkyl ether group.

In an embodiment 11 of capacitor 2 according to the invention, the capacitor is designed according to anyone of its embodiment 10, wherein the at least one impregnation solvent is a mono, di- or tri alkylene glycol, preferably diethylene glycol or dipropylene glycol, a mono-, di- or tri alkylene glycol monoether, preferably diethylene glycol monomethyl ether, diethylene glycol monoethyl ether or diethylene glycol monobutyl ether, an alkanediol or an alkanediol monoether, most preferably diethylene glycol or an alkanediol.

In an embodiment 12 of capacitor 2 according to the invention, the capacitor is designed according to its embodiment 11, wherein the alkanediol is selected from the group consisting of 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2-heptanediol, 1,3-heptanediol, 1,4-heptanediol, 1,5-heptanediol, 1,6-heptanediol, 1,7-heptanediol, 2,3-heptanediol, 2,4-heptanediol, 2,5-heptanediol, 2,6-heptanediol, 3,4-heptanediol, 3,5-heptanediol, 1,2-octanediol, 1,3-octanediol, 1,4-octanediol, 1,5-octanediol, 1,6-octanediol, 1,7-octanediol, 1,8-octanediol, 2,3-octanediol, 2,4-octanediol, 2,5-octanediol, 2,6-octanediol, 2,7-octanediol, 3,4-octanediol, 3,5-octanediol, 3,6-octanediol, 4,5-octanediol and any further alkanediol having a molecular weight in the range from 70 to 180 g/mol. Furthermore, suitable derivatives of the above mentioned alkanediols in which one hydrogen atom that is bonded to a carbon atom is substituted by an alkyl group, such as a methyl group or an ethyl group.

In an embodiment 13 of capacitor 2 according to the invention, the capacitor is designed according to anyone of its embodiments 1 to 12, wherein the at least one impregnation solvent has a boiling point (determined at 1013.25 hPa) of more than 205°C, preferably of more than 220°C and even more preferably of more than 240°C.

In an embodiment 14 of capacitor 2 according to the invention, the capacitor is designed according to anyone of its embodiments 1 to 13, wherein the at least one impregnation solvent has a melting point of less than 15°C, preferably of less than 5°C and even more preferably of less than -5°C.

In an embodiment 15 of capacitor 2 according to the invention, the capacitor is designed according to anyone of its embodiments 1 to 14, wherein the impregnation solution comprises the at least one impregnation solvent in an amount of at least 50 wt.-%, preferably of at least 75 wt.-%, even more preferably of at least 90 wt.-%, and most preferable of at least 95 wt.-%, in each case based on the total weight of the impregnation solution. In case of two of more impregnation solvents, these amounts represent the total amount of impregnation solvents.

In an embodiment 16 of capacitor 2 according to the invention, the capacitor is designed according to anyone of its embodiments 1 to 15, wherein at least 50 vol-%, more preferably at least 75 vol-% and even more preferably at least 90 vol-% of the open pore volume of the porous electrode body are filled with the at least one impregnation solvent.

In an embodiment 17 of capacitor 2 according to the invention, the capacitor is designed according to anyone of its embodiments 1 to 16, wherein the solid electrolyte, the impregnation solution or the both additionally comprise a stabilizer. Suitable stabilizers are those previously mentioned in connection with the method according to the present invention.

A contribution to solving at least one of the objects according to the invention is also made by the use of a capacitor 1 according to any one of its embodiments 1 to 3 or by the use of a capacitor 2 according to any one of its embodiments 1 to 17 in electronic circuits, for example, as smoothing capacitors ("*filter capacitors*") or suppression capacitors ("*decoupling capacitors*"). Electronic circuits can be found, for example, in computers (desktop, laptop, server), in computer peripheral devices (for example PC cards), in portable electronic devices, such as mobile telephones, digital cameras or consumer electronics, in consumer electronics equipment, such as in CD/DVD players and computer-game

consoles, in navigation systems, in telecommunications devices for example base stations for mobile communication, in household equipment, in medical technology, for example, for defibrillators, in power supplies such as those based on renewable energy or in automobile electronics, for example, for hybrid or electric cars.

A contribution to solving at least one of the objects according to the invention is also made by an electronic circuit comprising a capacitor 1 according to any one of its embodiments 1 to 3 or a capacitor 2 according to any one of its embodiments 1 to 17.

Porous electrode body provided in process step a)

In method step a) of the method according to the invention, a porous electrode body made of an electrode material is provided, wherein a dielectric at least partially covers a surface of this electrode material.

In principle, the porous electrode body can be manufactured in that a valve-metal powder with a high surface area is pressed and sintered to form a porous electrode body. In this context, an electrical contact wire preferably made from a valve metal, such as tantalum, is conventionally pressed into the porous electrode body. The porous electrode body is then coated with a dielectric, that is, an oxide layer, for example, by electro-chemical oxidation. As an alternative, metal films can be etched and coated with a dielectric by electrochemical oxidation in order to obtain an anode film with a porous region. In the case of a wound capacitor, an anode film with a porous region, which forms the electrode body, and a cathode film are separated by separators and wound up.

Within the scope of the invention, metals of which the oxide coatings do not allow the flow of current uniformly in both directions are understood as valve metals. With a voltage applied at the anode, the oxide layers of the valve metals block the flow of current, while in the case of a voltage applied to the cathode, considerable currents occur, which can destroy the oxide layer. The valve metals include Be, Mg, Al, Ge, Si, Sn, Sb, Bi, Ti, Zr, Hf, V, Nb, Ta and W and an alloy or compound of at least one of these metals with other elements. The most well-known representatives of the valve metals are Al, Ta and Nb. Combinations of electrical properties comparable with a valve metal are those with metallic conductivity, which can be oxidised and of which the oxide layers provide the properties described above. For example, NbO shows metallic conductivity, but is not generally regarded as a valve metal. However, layers of oxidised NbO show the typical properties of valve-metal oxide layers, so that NbO or an alloy or compound of NbO with other elements are typical examples of such compounds with electrical properties comparable with a valve metal. Electrode materials made of tantalum, aluminium and such electrode materials which are based on niobium or niobium oxide are preferred. Aluminium is particularly preferred as an electrode material.

For the manufacture of the porous electrode body often with a porous region, the valve metals can be sintered, for example, in powdered form to provide a generally porous electrode body, or alternatively, a porous structure is imprinted onto a metallic body. The latter can be implemented, for example, by etching a film.

In the following, for the sake of simplicity, bodies with a porous region are also referred to as porous. For example, electrode bodies with a porous region are also referred to as porous electrode bodies. On the one hand, the porous bodies can be penetrated by a plurality of channels and therefore be sponge-like. This is often the case if tantalum is used in the construction of the capacitor. On the other hand, pores can be present only at the surface, and the region disposed below the surface pores can be formed in a solid manner. This is often observed, if aluminium is used in the capacitor construction.

The porous electrode bodies manufactured in this manner are then oxidised, for example in an appropriate electrolyte, for example, phosphoric acid or an aqueous solution of ammonium adipate, by applying a voltage, in order to form the dielectric. The size of this forming voltage is dependent upon the oxide-layer thickness to be achieved or respectively the subsequent operating voltage of the capacitor. Preferred forming voltages lie in a range of from 1 to 1000 V, particularly preferably in a range of from 10 to 200 V, more particularly preferably in a range of from 15-100 V, more preferably in a range of from 20-50 V.

The porous electrode bodies used preferably have a porosity of 10 to 90 %, preferably of 30 to 80 %, particularly preferably of 50 to 80 %, and an average pore diameter of from 10 to 10000 nm, preferably from 50 to 5000 nm, particularly preferably from 100 to 3000 nm.

According to a special embodiment of the method according to the invention, the electrolytic capacitor to be manufactured is an aluminium wound capacitor. In this case, in method step a), a porous aluminium film as electrode material is formed anodically, whereby an aluminium-oxide coating is formed as the dielectric. The aluminium film (anode film) thus obtained is then provided with a contact wire and wound up with a further porous aluminium film (cathode film) also provided with a contact wire, whereby these two films are separated from one another by one or more separator papers, which are based, for example, on cellulose or preferably on synthetic papers. After the winding, the anode bodies obtained in this manner are fixed, for example, by means of an adhesive tape. The separator paper or papers can be carbon-ised by heating in an oven. This manner of manufacturing anode bodies for aluminium wound capacitors is sufficiently known from the prior art and is described, for example in US 7,497,879 B2.

Liquid composition used in process step b)

In process step b) of the method according to the invention, a liquid composition, preferably a dispersion, which comprises an electrically conductive polymer, at least one high-boiling solvent having a boiling point (determined at 1013.25 hPa) of at least 150°C and of not more than 275°C and a dispersing agent is introduced into at least a part of the porous electrode body provided in process step a) and the high-boiling solvent and the dispersing agent are then at least partially removed for the formation of a solid electrolyte that at least partially covers a surface of the dielectric.

The liquid composition is introduced into the porous region using known methods, for example, immersion, dipping, pouring, dripping, injection, spraying, spreading, painting or printing, for example, ink-jet, screen printing or tampon printing. The introduction is preferably carried out in that the porous electrode body provided in process step a) is immersed in the liquid composition and is accordingly impregnated with this liquid composition. The immersion into or the impregnation with the liquid composition is preferably implemented for a duration in a range of from 1 second to 120 min, particularly preferably in a range of from 10 seconds to 60 min and most preferably in a range of from 30 seconds to 15 min. The introduction of the liquid composition into the anode body can be facilitated, for example, by increased or reduced pressure, vibration, ultrasound or heat.

The introduction of the liquid composition into the porous electrode body can occur directly or using an adhesion promoter, for example, a silane, such as organofunctional silanes or their hydrolysates, for example, 3-glycidoxypropyltrialkoxysilane, 3-aminopropyltriethoxysilane, 3-mercaptopropyl-trimethoxysilane, 3-methacryloxypropyltrimethoxysilane, vinyltrimethoxysilane or octyltriethoxysilane, and/or one or more other functional layers.

By means of the introduction it is preferably achieved that the liquid composition tends to a lesser extent to cover over the pores of the porous region with a layer. Rather, the surfaces of the cavities of the pores are at least partially coated with the liquid composition. In this manner, the particles present in the liquid composition not only form a layer covering the openings of the pores; at least parts, often also all regions of the surface of the pores are covered with a layer of particles of the liquid composition.

The term *"polymers",* as it is used within the scope of the present invention, includes within the sense of the invention all compounds with more than one identical or different repeating unit.

The term *"electrically conductive polymers"* refers here in particular to the compound class of $\pi$-conjugated polymers, which have an electrical conductivity after oxidation or reduction. Preferably such $\pi$-conjugated polymers, which, after oxidation have an electrical conductivity in the order of magnitude of at least 0.1 S/cm are understood as electrically conductive polymers.

The electrically conductive polymer in the liquid composition is preferably selected from the group consisting of polythiophenes, polypyrroles and polyanilines, which are optionally substituted.

Particularly preferably, the electrically conductive polymer comprises a polythiophene with repeating units selected from the group consisting of the general formula (I), the general formula (II) or the general formula (III) or a combination of at least two thereof. In the following possible variants, the electrically conductive polymer in the dispersion comprises at least one polythiophene with repeating units of the general formula (I) or of the general formula (II) or of the general formula (III) or repeating units of the formulas (I) and (II) or repeating units of the formulas (I) and (III) or repeating units of the formulas (II) and (III) or repeating units of the formulas (I), (II) and (III),

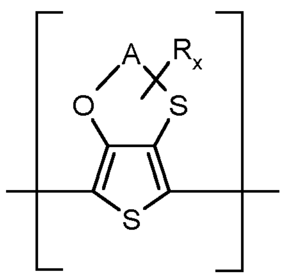
(I)

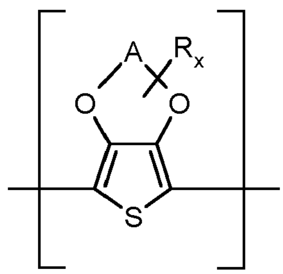
(II)

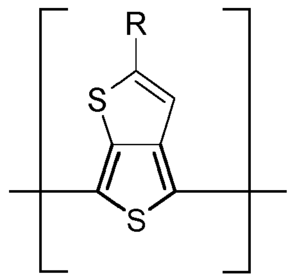
(III)

wherein

A denotes an optionally substituted $C_1$-$C_5$-alkylene residue,

R denotes a linear or branched, optionally substituted $C_1$-$C_{18}$-alkyl residue, an optionally substituted $C_5$-$C_{12}$-cycloalkyl residue, an optionally substituted $C_6$-$C_{14}$-aryl residue, an optionally substituted $C_7$-$C_{18}$-aralkyl residue, an optionally

substituted $C_1$-$C_4$-hydroxyalkyl residue or a hydroxyl residue,

x denotes an integer from 0 to 8 and,

in the case that several residues R are bound to A, these can be identical or different.

The general formulas (I) and (II) should be understood such that x substituents R can be bound to the alkylene residue.

Polythiophenes with repeating units of the general formula (I) or (II) or repeating units of the general formula (I) and (II), wherein A denotes an optionally substituted $C_2$-$C_3$-alkylene residue and x denotes 0 or 1 are particularly preferred. Poly(3,4-ethylenedioxythiophene), which is optionally substituted, is quite particularly preferred as a conductive polymer of the solid electrolyte.

Within the framework of the invention, the prefix poly- is understood to mean that more than one identical or different repeating unit is contained in the polymer or polythiophene. The polythiophenes comprise in total n repeating units of the general formula (I) or of the general formula (II) or of the general formula (III) or of the general formulas (I) and (II) or of the general formulas (I) and (III) or of the general formulas (II) and (III) or of the general formulas (I), (II) and (III), wherein n is an integer from 2 to 2000, preferably 2 to 100. The repeating units of the general formula (I) or of the general formula (II) or of the general formula (III) or the repeating units of the general formulas (I) and (II) or the repeating units of the general formulas (I) and (III) or the repeating units of the general formulas (II) and (III) or the repeating units of the general formulas (I), (II) and (III) can be respectively identical or different in each case within one polythiophene. Polythiophenes with respectively identical repeating units of the general formula (I) or of the general formula (II) or of the general formula (III) or with respectively identical repeating units of the general formulas (I) and (II), or of the general formulas (I) and (III), or of the general formulas (II) and (III), or with respectively identical repeating units of the general formulas (I), (II) and (III) are preferred. Polythiophenes with respectively identical repeating units of the general formula (I) or of the general formula (II) or with respectively identical repeating units of the general formulas (I) and (II) are particularly preferred.

The polythiophenes preferably carry H in each terminal group.

Within the scope of the invention, $C_1$-$C_5$-alkylene residues A are preferably methylene, ethylene, n-propylene, n-butylene or n-pentylene. $C_1$-$C_{18}$-alkyl R preferably denote linear or branched $C_1$-$C_{18}$-alkyl residues such as methyl, ethyl, n- or iso-propyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethylpropyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, $C_5$-$C_{12}$-cycloalkyl residues R denote, for example, cyclopentyl, cyclohexyl, cycloheptyl, cyclooctyl, cyclononyl or cyclodecyl, $C_5$-$C_{14}$-aryl residues R denote, for example, phenyl or naphthyl, and $C_7$-$C_{18}$-aralkyl residues R, for example, benzyl, o-, m-, p-tolyl, 2,3-, 2,4-, 2,5-, 2,6-, 3,4-, 3,5-xylyl or mesityl. The above list is provided for the purpose of exemplary explanation of the invention and should not be regarded as exclusive.

As optional further substituents for the residues A and/or the residues R, numerous organic groups come under consideration within the scope of the invention, for example, alkyl-, cycloalkyl-, aryl-, aralkyl-, alkoxy, halogen-, ether-, thioether-, disulfide-, sulfoxide-, sulfon-, sulfonate-, amino-, aldehyde-, keto-, carboxylic ester-, carboxylic acid-, carbonate-, carboxylate-, cyano-, alkylsilane- and alkoxysilane groups and carboxyl amide groups.

The residues A and R listed above and/or the further substituents of the residues A and R, for example, come into consideration as substituents for polyaniline or polypyrrole. Un-substituted polyanilines are preferred.

The scope of the invention includes all of the general residue definitions, parameters and explanations presented above and listed below or named in the preferred ranges, together with one another, that is to say, in any combination between the respective ranges and preferred ranges.

The polythiophenes used in the preferred method as a solid electrolyte can be neutral or cationic. In preferred embodiments, they are cationic, wherein *"cationic"* relates only to the charges provided on the main polythiophene chain. Dependent upon the substituent on the residues, the polythiophenes can carry positive and negative charges within the structural unit, whereby the positive charges are disposed on the main polythiophene chain and the negative charges optionally on the residues R substituted by sulfonate or carboxylate groups. Accordingly, the positive charges of the polythiophene main chain can be compensated in part or completely by the anionic groups optionally present on the residues R. In general, in these cases, the polythiophenes can be cationic, neutral or even anionic. However, within the scope of the invention they are all regarded as cationic polythiophenes, because the positive charges on the main polythiophene chain are of decisive importance. The positive charges are not shown in the formulas, because their precise number and position cannot be accurately determined. The number of positive charges, however, is at least 1 and at most n, wherein n denotes the total number of all repeating units (identical or different) within the polythiophene.

For the compensation of the positive charge, provided this does not already take place through the optionally sulfonate-substituted or carboxylate-substituted and therefore negatively charged residues R, the cationic polythiophenes require anions as counterions.

The counterions can be monomeric or polymeric anions, the latter are also referred to below as polyanions. Polymeric anions are preferred by comparison with monomeric anions, because they contribute to the formation of the film and, because of their size, lead to thermally more stable electrically conductive films.

Polymeric anions here can be, for example, anions of polymeric carboxylic acids, such as polyacrylic acids, polymethacrylic acid or polymaleic acids, or polymeric sulfonic acids, such as polystyrene sulfonic acids and polyvinyl sulfonic acids. These polycarboxylic and polysulfonic acids can also be copolymers of vinylcarboxylic and vinylsulfonic acid with other polymerisable monomers, such as acrylic esters and styrene.

An anion of a polymeric carboxylic acid or sulfonic acid in the particles mentioned is preferred as a polymeric anion.

The anion of polystyrene sulfonic acid (PSS), which is present with the use of polythiophene, especially of poly(3,4-ethylenedioxythiophene), preferably complex-bound in the form of the PEDOT/PSS complexes known from the prior art, is particularly preferred as the polymeric anion. Such complexes can be obtained through oxidative polymerisation of the thiophene monomers, preferably 3,4-ethylenedioxythiophene, in aqueous solution in the presence of polystyrene sulfonic acid.

The molecular weight of the poly-acids providing the polyanions is preferably 1000 to 2 000 000, by particular preference 2000 to 500 000. The polyacids or their alkaline salts are commercially available, for example, polystyrene sulfonic acids and polyacrylic acids, but can also be manufactured using known methods (see, for example, Houben Weyl, Methoden der organischen Chemie, Vol. E 20 Makromolekulare Stoffe, Part 2, (1987), [Methods of Organic Chemistry, Macromolecular Substances] pages 1141 et seq.).

The polymer anion(s) and electrically conductive polymers can be contained in the dispersion, especially in a weight ratio of 0.5 : 1 to 50 : 1, preferably of 1 : 1 to 30 : 1, particularly preferably 1.5 : 1 to 20 : 1. The weight of the electrically conductive polymers in this context corresponds to the weighed amount of the monomers used, on the assumption that a complete conversion takes place during the polymerisation.

As monomeric anions, for example, those of $C_1$-$C_{20}$-alkane sulfonic acids, such as methane-, ethane-, propane-, butane- or higher sulfonic acids such as dodecanic sulfonic acid, aliphatic perfluorosulfonic acids, such as trifluoromethane sulfonic acid, perfluorobutane sulfonic acid or perfluoroctane sulfonic acid, aliphatic $C_1$-$C_{20}$-carboxylic acids, such as 2-ethylhexyl carboxylic acid, aliphatic perfluorocarboxylic acids, such as trifluoroacetic acid or perfluoroctane acid, and aromatic sulfonic acids, optionally substituted with $C_1$-$C_{20}$-alkyl groups, such as benzene sulfonic acid, o-toluene sulfonic acid, p-toluene sulfonic acid or dodecylbenzene-sulfonic acid and cycloalkane sulfonic acids such as camphor sulfonic acid or tetrafluoroborates, hex-afluorophosphates, perchlorates, hexafluoroantimonates, hexafluoroarsenates or hexachloroan-timonates, can be used. The anions of p-toluene sulfonic acid, methane sulfonic acid or camphor sulfonic acid are preferred as monomeric anions.

Cationic polythiophenes, which contain anions as counterions for charge compensation, are often referred to in the specialist world as polythiophene/(poly)-anion-complexes.

Also suitable as polythiophenes which may be used for the formation of the solid electrolyte are self-doped polythiophenes that preferably comprise, to the extent of at least 50 %, still more preferably to the extent of at least 75 %, still more preferably to the extent of at least 95 % and most preferably to the extent of 100 %, recurring units of the formula (I)

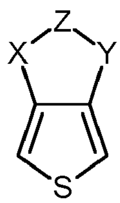

(I)

in which

X,Y are identical or different and denote O, S, N-$R^1$, wherein $R^1$ denotes aryl, $C_1$-$C_{18}$-alkyl or hydrogen,

Z denotes an organic residue caryying at least an anionic substituent, preferebly a -$SO_3^-M^+$ group in which $M^+$ denotes a cation.

According to a preferred embodiment of the recurring units of the formula (I)

Z denotes $-(CH_2)_mCR^2R^3-(CH_2)_n-$,

wherein

$R^2$ denotes hydrogen, $-(CH_2)_s-O-(CR^4{}_2)_p-SO_3^-M^+$ or $-(CH_2)_p-SO_3^-M^+$,

$R^3$ denotes $-(CH_2)_s-O-(CR^4{}_2)_p-SO_3^-M^+$ or $-(CH_2)_p-SO_3^-M^+$,

m,n are identical or different and denote an integer from 0 to 3,

$R^4$ denotes hydrogen or a $C_1$-$C_{10}$ alkyl group, preferably a methyl group,

s denotes an integer from 0 to 10 and

p denotes an integer from 1 to 18,

and wherein $R^1$, $R^2$, $R^3$ and $R^4$ in the formulas above can be the same or different.

The percentage figures stated above are intended in this context to express the numerical content of the units of the structural formula (I) in the total number of monomer units in the self-doped conductive polymer.

Suitable cations $M^+$ are e.g. $H^+$, $Li^+$, $Na^+$, $K^+$, $Rb^+$, $Cs^+$ and $NH4^+$. Particularly suitable cations are $Na^+$ and $K^+$.

Particularly preferred monomers of the structural formula (I) are those in which

X,Y denote O,
Z denotes $-(CH_2)_m-CR^2R^3-(CH_2)_n-$,
$R^2$ denotes hydrogen or $-(CH_2)_s-O-(CH_2)_p-SO_3^-M^+$, $-(CH_2)_p-SO_3^-M^+$ or $-(CH_2)_s-O-(CH_2)_p-CHR^4-SO_3^-M^+$,
$R^3$ denotes $-(CH_2)_s-O-(CH_2)_p-SO_3^-M^+$, $-(CH_2)_p-SO_3^-M^+$ or $-(CH_2)_s-O-(CH_2)_p-CHR^4-SO_3^-M^+$,
$M^+$ denotes a cation,
m,n are identical or different and denote an integer from 0 to 3,
$R^4$ denotes hydrogen a methyl group or an ethyl group;
s denotes an integer from 0 to 10 and
p denotes an integer from 1 to 18.

Very particularly preferred monomers of the structural formula (I) are those in which

X,Y denote O,
Z denotes $-(CH_2)-CR^2R^3-(CH_2)_n-$,
$R^2$ denotes hydrogen,
$R^3$ denotes $-(CH_2)_s-O-(CH_2)_p-SO_3^-M^+$, $-(CH_2)_p-SO_3-M^+$,$-(CH_2)_s-O-(CH_2)_p-CH(CH_3)-SO_3^-M^+$ or $-(CH_2)_s-O-(CH_2)_p-CH(CH_2CH_3)-SO_3^-M^+$,
$M^+$ denotes $Na^+$ or $K^+$,
n denotes 0 or 1,
s denotes 0 or 1 and
p denotes 2, 3, 4 or 5.

Suitable Examples of self-doped polymers which can also be used for the formation of the solid electrolyte are disclosed in WO-A-2014/048562 and in US-A-2015/0337061. Concrete examples of very particularly preferred self-doped conductive polymers include poly(4-[(2,3-dihydrothieno[3,4-b]-[1,4]dioxin-2-yl)methoxy]propane-1-sulfonic acid), poly(4-[(2,3-dihydrothieno[3,4-b][1,4]dioxin-2-yl)methoxy]butane-1-sulfonic acid) (PEDOT-S), poly(4-[(2,3-dihydrothieno[3,4-b][1,4]dioxin-2-yl)methoxy]butane-2-sulfonic acid) or a mixture thereof.

Preferably, the electrically conductive polymer in the liquid composition used in process step b) is present in the form of particles, particularly preferably in the form of swollen gel-particles of a polythiophene/(poly)-anion-complexes such as PEDOT/PSS. The particles preferably have a specific electrical conductivity of greater than 100 S/cm. The specific electrical conductivity of the particles in this context is the specific electrical conductivity of the film in the dry state, which forms from the particles upon drying of the dispersion. Preferably, liquid composition are used, of which the particles have a specific electrical conductivity of greater than 150 S/cm, particularly preferably greater than 250 S/cm, more particularly preferably greater than 400 S/cm, further particularly preferably greater than 750 S/cm. In some cases, particles with a maximum specific conductivity of 5000 S/cm are also used.

If the electrically conductive polymer in the liquid composition is present in the form of particles, the particles

preferably have a diameter $d_{50}$ in a range of from 1 to 100 nm, preferably in a range of from 1 to below 70 nm, preferably in a range of from 1 to 50 nm, particularly preferably in a range from 1 to 40 nm and more particularly preferably in a range of from 5 to 30 nm. The determination of the diameter of the particles is carried out via ultra-centrifuge measurement according to the method described here. It is furthermore preferred that the particles of the electrically conductive polymer in the liquid composition have a $d_{90}$ value of the diameter distribution of less than 150 nm, particularly preferably less than 100 nm, more particularly preferably less than 50 nm. Moreover, the particles of the conductive polymer in the liquid composition preferably have a $d_{10}$ value of the diameter distribution greater than 1 nm, particularly preferably greater than 3 nm, more particularly preferably greater than 5 nm.

The liquid composition used in process step b) preferably comprises a purity with regard to metals and transition metals as described in WO 2010/003874 A2, published document on page 6, lines 10-29. The low concentrations of metals in the liquid composition have the major advantage that the dielectric is not damaged during the formation of the solid electrolyte and during the subsequent operation of the capacitor.

The liquid composition used in process step b) can further comprise at least one dispersing agent, wherein water, organic solvents or mixtures of organic solvents and water are preferred as the dispersing agent. However, if the electrically conductive polymer is dispersible or soluble in the impregnation solvent, the impregnation solvent can act as the dispersing agent. In this case, the impregnation solution does not necessarily have to comprise a dispersing agent.

The following solvents can be named as examples of dispersing agents: aliphatic alcohols such as methanol, ethanol, i-propanol and butanol; aliphatic ketones such as acetone and methylethylketone; aliphatic carboxylic esters such as acetic acid ethylester and acetic acid butyl ester; aromatic hydrocarbons such as toluene and xylene; aliphatic hydrocarbons such as hexane, heptane and cyclohexane; chlorinated hydrocarbons such as dichloromethane and dichloroethane; aliphatic nitriles such as acetonitrile, aliphatic sulfoxides and sulfones such as dimethylsulfoxide and sulfolane; aliphatic carboxylic acid amides such as methylacetamide, dimethylacetamide and dimethylformamide; aliphatic and araliphatic ethers such as diethylether and anisole. Moreover, water or a mixture of water with the above-named organic solvents can also be used as a dispersing agent.

Preferred dispersing agents are water or other protic solvents such as alcohols, for example, methanol, ethanol, i-propanol and butanol, and mixtures of water with these alcohols. The particularly preferred dispersing agent is water.

The liquid composition used in process step b) further comprises at least one high-boiling solvent having a boiling point (determined at 1013.25 hPa) of at least 150°C and of not more than 275°C. Preferred high-boiling preferably fulfil at least one of the following properties, more preferably they fulfil both of these properties:

($\alpha$1) they have a molecular weight of less than 180 g/mol, preferably less than 150 g/mol and more preferably less than 120 g/mol;

($\alpha$2) they have a boiling point (determined at 1013.25 hPa) of less than 250°C

Preferably, the liquid composition comprises, as the high-boiling solvent, lactone-group-comprising compounds, such as $\gamma$-butyrolactone, $\gamma$-valerolactone, amide- or lactam-group-comprising compounds such as N,N-dimethylacetamide, N-methylacetamide, N,N-dimethylformamide (DMF), N-methylformamide, N-methylformanilide, N-methylpyrrolidone (NMP), N-octylpyrrolidone or pyrrolidone, sulfones and sulfoxides, such as dimethylsulfoxide (DMSO) and/or di- or polyalcohols, such as ethylene glycol, diethylene glycol, 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2-heptanediol, 1,3-heptanediol, 1,4-heptanediol, 1,5-heptanediol, 1,6-heptanediol, 1,7-heptanediol, 2,3-heptanediol, 2,4-heptanediol, 2,5-heptanediol, 2,6-heptanediol, 3,4-heptanediol, 3,5-heptanediol, 1,2-octanediol, 1,3-octanediol, 1,4-octanediol, 1,5-octanediol, 1,6-octanediol, 1,7-octanediol, 1,8-octanediol, 2,3-octanediol, 2,4-octanediol, 2,5-octanediol, 2,6-octanediol, 2,7-octanediol, 3,4-octanediol, 3,5-octanediol, 3,6-octanediol, 4,5-octanediol and any further alkanediol having a molecular weight in the range from 70 to 180 g/mol. Furthermore preferred are derivatives of the above mentioned alkanediols in which one hydrogen atom that is bonded to a carbon atom is substituted by an alkyl group, such as a methyl group or an ethyl group.

According to a particular embodiment of the method according to the invention the liquid composition used in process step b) comprises a mixture of at least two high-boiling solvent, preferably a mixture of at least two of the high-boiling solvents mentioned in the paragraph above.

Moreover, the liquid composition used in process step b) can comprise further components such as surface-active substances, for example, ionic and non-ionic surfactants or adhesion promoters, such as organo-functional silanes or their hydrolysates, for example, 3-glycidoxypropyltrialkoxysilane, 3-aminopropyltriethoxysilane, 3-mercaptopropyltrimethoxysilane, 3-methacryloxypropyltrimethoxysilane, vinyltrimethoxysilane or octyltriethoxysilane, crosslinking agents such as melamine compounds, blocked isocyanates, functional silanes - for example, tetraethoxysilane, alkoxysilane hydrolysates, for example, based on tetraethoxysilane, epoxysilanes, such as 3-glycidoxypropyltrialkoxysilane

- polyurethanes, polyacrylates or polyolefin dispersions. The liquid composition used in process step b) can also comprise one or more organic binding agents soluble in organic solvents as described in WO 2009/141209 A1 on page 12, lines 16-34. The liquid composition can have a pH value from 1 to 14, a pH value from 1 to 8 is preferred. For corrosion-sensitive dielectrics, such as aluminium oxides or niobium oxides, liquid compositions with a pH value from 2.5 to 8 are preferred, in order to avoid damaging the dielectric, more preferred 2.5 to 7, most preferred 3 to 6.

In order to adjust the pH value, the bases or acids described in WO 2010/003874 A2 on page 4, lines 13-32, for example, can be added to the liquid composition. Such additives, which do not impair the film formation of the liquid composition and are not volatile at relatively high temperatures, for example, at soldering temperatures, but remain within the solid electrolyte under these conditions, such as the bases 2-dimethylaminoethanol, 2,2'-iminodiethanol or 2,2',2"-nitrilotriethanol and the acid polystyrene sulfonic acid, are preferred.

The viscosity of the liquid composition used in process step b) can, dependent upon the method of application, be between 0.1 and 1000 mPa×s (measured with a rheometer at 20°C and a shear rate of 100 $s^{-1}$). Preferably, the viscosity is 1 to 200 mPa×s, particularly preferably between 10 to 150 mPa×s, more particularly preferably 10 to 100 mPa×s.

The solids content of the liquid composition used in process step b) preferably lies in a range of from 1 to 30 % by weight, particularly preferably in a range of from 1 to 20 % by weight and most particularly preferably in a range of from 1 to 10 % by weight, in each case based on the total weight of the liquid composition. The solids content is determined by drying the dispersion at a temperature which is sufficiently high to remove the dispersing agent, but which does not break down the solid material.

After the porous electrode bodies have been impregnated with the liquid composition described above, the dispersing agent and the high-boiling-solvent comprised in the dispersion are at least partially removed, so that a solid electrolyte is formed, which covers the dielectric partially or completely. In this context, it is preferable that the covering of the dielectric by the solid electrolyte preferably amounts to at least 50%, particularly preferably at least 70% and most preferably at least 80%, wherein the measurement of the capacitance of the capacitor in a dry and wet condition at 120°C allows a determination as described in DE-A-10 2005 043 828.

The removal is preferably carried out in that the porous electrode body is removed from the liquid composition and dried, wherein the drying preferably takes place at a temperature in a range from 20°C to 200°C, particularly preferably in a range from 50°C to 180°C and more preferably in a range from 80°C to 150°C. The drying conditions (i. e. drying time, drying pressure and drying temperature) are preferably adjusted to be within a range that ensures that at least 50 wt.-%, more preferably at least 75 wt.-% and even more preferably at least 90 wt.-% of the total amount of the high-boiling solvent is removed when forming the solid electrolyte. In a particularly preferred embodiment of the process according to the present invention the drying conditions are adjusted to be within a range that ensures that high-boiling solvent is completely removed when forming the solid electrolyte.

Impregnation solution used in process step c)

In process step c) of the method according to the invention at least a part of the pores of the porous electrode body obtained in process step b) (i. e. the porous electrode body in which the dielectric is at least partially covered with a solid electrolyte) is filled with an impregnation solution comprising at least one impregnation solvent, wherein the at least one impregnation solvent comprises at least one hydroxy group and has a molecular weight in the range from 70 to 180 g/mol.

The immersion in or respectively the impregnation with the impregnation solution is preferably implemented for a duration in a range of from 1 second to 120 min, particularly preferably in a range of from 10 seconds to 60 min and most preferably in a range of from 30 seconds to 15 min. The immersion is preferably carried out in that the porous electrode body obtained in process step b) is immersed at least partially in the impregnation solution or the impregnation solution is injected into the porous electrode body, and is accordingly impregnated with this impregnation solution. The introduction of the impregnation solution into the porous electrode body can be facilitated, for example, by increased or reduced pressure, vibration, ultrasound or heat.

When impregnating the pores of the porous electrode body with the impregnation solution in process step c), it is furthermore preferred to ensure that impregnation is accomplished to such an extent that at least 50 vol-%, more preferably at least 75 vol-% and even more preferably at least 90 vol-% of the open pore volume of the porous electrode body obtained in process step b) are filled with the at least one impregnation solvent. It is particularly preferred that these filling amounts are reached immediately before performing process step d), i. e. before encapsulating the porous electrode body in order to prevent any further evaporation of the impregnation solvent out of the pores.

Preferred impregnation solvents that are used in the method according to the present invention fulfil at least one of the following properties, more preferably they fulfil both of these properties:

(β1) they have a boiling point (determined at 1013.25 hPa) of more than 205°C, preferably of more than 220°C and

even more preferably of more than 240°C;

($\beta$2) they have a melting point of less than 15°C, preferably of less than 5°C and even more preferably of less than -5°C.

In this context it is particularly preferred that the at least one impregnation solvent is a compound that comprises two hydroxy groups or is a compound that comprises one hydroxy group and one ether group, preferably one alkyl ether group. More preferably, the at least one impregnation solvent is a mono, di- or tri alkylene glycol, preferably diethylene glycol or dipropylene glycol, a mono-, di- or tri alkylene glycol monoether, preferably diethylene glycol monomethyl ether, diethylene glycol monoethyl ether or diethylene glycol monobutyl ether, an alkanediol or an alkanediol monoether, most preferably diethylene glycol or an alkanediol.

Preferred alkanediols are selected from the group consisting of 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2-heptanediol, 1,3-heptanediol, 1,4-heptanediol, 1,5-heptanediol, 1,6-heptanediol, 1,7-heptanediol, 2,3-heptanediol, 2,4-heptanediol, 2,5-heptanediol, 2,6-heptanediol, 3,4-heptanediol, 3,5-heptanediol, 1,2-octanediol, 1,3-octanediol, 1,4-octanediol, 1,5-octanediol, 1,6-octanediol, 1,7-octanediol, 1,8-octanediol, 2,3-octanediol, 2,4-octanediol, 2,5-octanediol, 2,6-octanediol, 2,7-octanediol, 3,4-octanediol, 3,5-octanediol, 3,6-octanediol, 4,5-octanedioland any further alkanediol having a molecular weight in the range from 70 to 180 g/mol. Furthermore, preferred are derivatives of the above mentioned alkanediols in which one hydrogen atom that is bonded to a carbon atom is substituted by an alkyl group such as a methyl group or an ethyl group.

The impregnation solution may, in addition to the impregnation solvent, comprise further components such as stabilizers (such as those mentioned previously) and/or further solvents, particularly low-boiling solvents having a boiling point (determined at 1013.25 hPa) of less than 150°C, preferably of less than 120°C. However, it is preferred that the impregnation solution that is used in process step c) comprises the at least one impregnation solvent in an amount of at least 50 wt.-%, preferably of at least 5 wt.-% and even more preferably of at least 90 wt.-%, in each case based on the total weight of the impregnation solution. In case of two of more impregnation solvents, these amounts represent the total amount of impregnation solvents.

Provided an impregnation solution comprising the impregnation solvent and a low-boiling solvent is used in process step d), the low-boiling solvent may at least partially be removed before encapsulating the porous electrode body in process step d). This removal is preferably accomplished by taking the impregnated porous electrode body out of the solution and subsequently drying it (thereby, however, ensuring that the pores remain sufficiently filled with the impregnation solvent). The drying is preferably implemented at a temperature in a range of from 20°C to 200°C, particularly preferably in a range of from 50°C to 175°C and more particularly preferably in a range of from 75°C to 150°C and for a duration in a range of from 1 minute to 120 minutes, particularly preferably in a range of from 5 minutes to 90 minutes and most particularly preferably in a range of from 10 minutes to 60 minutes. However, according to a particular preferred embodiment of the process according to the present invention the impregnation solution does not contain any low-boiling solvents.

<u>Encapsulation in process step d)</u>

After the impregnation solution has been introduced into the porous electrode body in a manner as described above, the electrolytic capacitors can be finished in a manner known to the person skilled in the art. In the case of a tantalum electrolytic capacitor, the capacitor body can be coated, for example, with a graphite layer and a silver layer, as known from DE-A-10 2005 043 828, while in the case of an aluminium wound capacitor corresponding to the teaching of US 7,497,879 B2, the capacitor body is built into an aluminium cup, provided with a sealing rubber and firmly closed in a mechanical manner by flanging. Following this, defects in the dielectric can be removed from the capacitor in a per se known manner by "ageing".

Encapsulation is preferably accomplished by sealing the capacitor body with resins, such as epoxy resins or thermoplastic resins like those disclosed in EP 0 447 165 A2. In case of an aluminium electrolytic capacitor encapsulation is preferably accomplished by providing the porous electrode body obtained in process step c) with the aluminium cup and closing it with the sealing rubber.

The invention is now explained in greater detail with reference to non-limiting drawings and examples.

Figure 1 shows a schematic sectional view through a part of a capacitor according to the invention. The latter comprises a porous electrode body 1, made mostly from a porous electrode material 2 such as aluminium. On the surface of the electrode material 2, a dielectric 3 is formed as a thin layer, so that an anode body is formed which is still porous, comprising the electrode body 1 made of the electrode material 2 and the dielectric 3. On the dielectric 3, there follows, optionally after further layers, a layer of a solid electrolyte 4 (for example, made of PEDOT/PSS particles), so that a

capacitor body is formed, comprising the electrode body 1 made of the electrode material 2, the dielectric 3 and the solid electrolyte 4. The pores 5 of the porous electrode body 1 are at least partially filled with an impregnation solvent (for example, with an alkanediol; see the grey shading in figure 1), so that a capacitor is formed, comprising the porous electrode body 1 made of the electrode material 2, the dielectric 3, the solid electrolyte 4 and the impregnation solvent 6.

Figure 2 shows an aluminium capacitor according to the present invention that comprises capacitor element 8 (porous electrode material 2 coated with dielectric 3 and solid electrolyte 4 and comprising the impregnation solvent) and lead wires 10 which contact the porous anode foil and an opposite cathode foil, both foils being wound with two separator papers between both foils and being fixed with a winding end tape). Capacitor element 8 is held in an aluminium casing 7 in the shape of a bottomed cylinder, a rubber packing 9 is attached in the opening of the casing.

MEASUREMENT METHODS:

Equivalent series resistance (ESR)

The equivalent series resistance (in mΩ) was determined at 20°C at 100 kHz by means of an LCR meter (Agilent 4284A). In each capacitor experiment 2 capacitors have been prepared and the average ESR-value was determined.

Capacitance (CAP)

The capacitance was determined at 20 °C and -55°C at 120 Hz by means of an LCR meter (Agilent 4284A). In each capacitor experiment 2 capacitors have been prepared and the average capacitance-value was determined.

Ionic conductivity of the impregnation solvent

The ionic conductivity of the impregnation solvent is measured with a conductivity meter (Knick 703 or equivalent conductivity meters).

Viscosity

The viscosity of the dispersion was determined with a shear rate of 100 Hz and 20°C using a rheometer (Haake Type RotoVisco 1 with a double-gap cylinder-system DG43).

Solids content

In order to determine the solids content, 5 g of the dispersion were dried for 15 hours at 100°C, and the solids content was determined by differential weighing.

pH-value

pH Measurement: pH value is determined with a pH meter. After calibration the pH electrode is put into the slowly stirred dispersion or solution until the reading of the pH is constant.

EXAMPLES

Process Step a)

A porous electrode body for a cylindrical aluminium capacitor (as described in Fig 2) having a rated voltage of 16 V and a rated capacitance of 100 μF was produced in the following way.

An aluminium foil was etched, thereby to roughen the surface of the aluminium foil. The aluminium foil was then subjected to anodic oxidation using an aqueous ammonium adipate solution, thereby to form a dielectric layer on the surface of the aluminium foil. Thus, an anode foil was produced.

A second aluminium foil was etched, thereby to roughen the surface of the aluminium foil. Thus, a cathode foil was thus prepared.

An anode lead wire and a cathode lead wire were connected to the anode and the cathode foil, respectively. The anode and the cathode foil were wound together with two separator papers between both foils. A tape was put on the outside of the wound element to avoid unwinding of the foils. The wound element was then subjected to another anodic oxidation to form a dielectric layer on the cut edges of the anode foil.

Thus, an anode body comprising an electrode body having a dielectric layer was prepared.

Process step b)

The porous electrode body from process step a) was placed into a chamber with a bath of a liquid composition comprising an electrically conductive polymer. Air pressure in the chamber was reduced to 100 hPa. The anode body was dipped into the liquid composition for 300 s. Then, the anode body was extracted from the liquid composition and the chamber was vented to atmospheric pressure. Thereafter, the anode body was dried at 120°C for 30 min and then at 150°C for 30 min. The impregnation and drying were carried out a further time. Thus, a capacitor body was obtained.

Process step c)

The capacitor body of process step b) was placed into a chamber with a bath of an impregnation solution. Air pressure in the chamber was reduced to 100 hPa. The capacitor body was dipped into the impregnation solution for 300 s. Then, the capacitor body was extracted from the impregnation solution and the chamber was vented to atmospheric pressure. Thus, a capacitor body impregnated with the impregnation solution was obtained.

Process step d)

The capacitor body of process step c) was placed in a cylindrical aluminium housing and sealed with a rubber sealing, to obtain a finished capacitor.

All capacitors prepared by process steps a) to d) showed a capacitance at 20°C of 95-100 $\mu$F.

Synthesis Example 1 (synthesis of a conductive polymer dispersion)

868 g of deionized water and 330 g of an aqueous polystyrenesulphonic acid solution having an average molecular weight of 70000 g/mol and a solids content of 3.8 wt.-% were initially introduced into a 2 1 three-necked flask with a stirrer and internal thermometer. The reaction temperature was kept between 20 and 25°C. 5.1 g of 3,4-ethylenedioxythiophene were added, while stirring. The solution was stirred for 30 min. 0.03 g of iron(III) sulphate and 9.5 g of sodium persulphate were then added and the solution was stirred for a further 24 h. After the reaction had ended, for removal of inorganic salts 100 ml of a strongly acid cation exchanger and 250 ml of a weakly basic anion exchanger were added and the solution was stirred for a further 2 h. The ion exchanger was filtered off. The poly(3,4-ethylenedioxythiophene)/polystyrenesulphonate dispersion was homogenized with a high pressure homogenizer ten times under a pressure of 700 bar. The dispersion was subsequently concentrated to a solids content of 2.5 % and then additionally homogenized another three times under a pressure of 1500 bar.

Preparation Example 1

45 g of the conductive polymer from Synthesis Example 1 and 5 g of ethylene glycol were mixed and the pH was adjusted to 3.0 using ammonia. Thus, a liquid composition which comprises an electrically conductive polymer was obtained.

Preparation Example 2

45 g of the conductive polymer from Synthesis Example 1 and 5 g of diethylene glycol were mixed and the pH was adjusted to 3.0 using ammonia. Thus, a liquid composition which comprises an electrically conductive polymer was obtained.

Preparation Example 3

45 g of the conductive polymer from Synthesis Example 1 and 2.6 g of 1,2-propanediol were mixed and the pH was adjusted to 4.0 using ammonia. Thus, a liquid composition which comprises an electrically conductive polymer was obtained.

Preparation Example 4

45 g of the conductive polymer from Synthesis Example 1 and 8 g of 1,3-propanediol were mixed and the pH was adjusted to 7.0 using ammonia. Thus, a liquid composition which comprises an electrically conductive polymer was obtained.

Preparation Example 5

45 g of the conductive polymer from Synthesis Example 1 and 5 g of 1,5-pentanediol were mixed and the pH was adjusted to 3.0 using ammonia. Thus, a liquid composition which comprises an electrically conductive polymer was obtained.

Preparation Example 6

45 g of the conductive polymer from Synthesis Example 1 and 5 g of 1,2-pentanediol were mixed and the pH was adjusted to 2.5 using 2-dimethylaminoethanol. Thus, a liquid composition which comprises an electrically conductive polymer was obtained.

Preparation Example 7

45 g of the conductive polymer from Synthesis Example 1 and 2.5 g of 2-methyl-2,4-pentanediol and 2.5 g of 1,3-propanediol were mixed and the pH was adjusted to 3.0 using ammonia. Thus, a liquid composition which comprises an electrically conductive polymer was obtained.

Preparation Example 8

45 g of the conductive polymer from Synthesis Example 1, 4 g of 2,4-pentanediol and 1 g of 1,3-propanediol were mixed and the pH was adjusted to 3.0 using ammonia. Thus, a liquid composition which comprises an electrically conductive polymer was obtained.

Preparation Example 9

45 g of the conductive polymer from Synthesis Example 1 and 5 g of 1,4-pentanediol were mixed and the pH was adjusted to 3.0 using ammonia. Thus, a liquid composition which comprises an electrically conductive polymer was obtained.

Preparation Example 10

45 g of the conductive polymer from Synthesis Example 1, 5 g of 1,2,4-butanetriol and 0.1 g surfactant were mixed and the pH was adjusted to 3.0 using ammonia. Thus, a liquid composition which comprises an electrically conductive polymer was obtained.

Preparation Example 11

45 g of the conductive polymer from Synthesis Example 1 and 5 g of glycerol were mixed and the pH was adjusted to 3.0 using ammonia. Thus, a liquid composition which comprises an electrically conductive polymer was obtained.

Preparation Example 12

45 g of the conductive polymer from Synthesis Example 1 and 5 g of diglycerol were mixed and the pH was adjusted to 3.0 using ammonia. Thus, a liquid composition which comprises an electrically conductive polymer was obtained.

Preparation Example 13

45 g of the conductive polymer from Synthesis Example 1 and 5 g of polyethylene glycol 400 (PEG400) were mixed and the pH was adjusted to 3.0 using ammonia. Thus, a liquid composition which comprises an electrically conductive polymer was obtained.

Preparation Example 14

45 g of the conductive polymer from Synthesis Example 1 and 5 g of polyglycerol were mixed and the pH was adjusted to 3.0 using ammonia. Thus, a liquid composition which comprises an electrically conductive polymer was

obtained.

Preparation Example 15

45 g of the conductive polymer from Synthesis Example 1, 5 g of 1,3-propanediol and 0.5 g of tannic acid were mixed and the pH was adjusted to 7.0 using ammonia. Thus, a liquid composition which comprises an electrically conductive polymer solution was obtained.

Preparation Example 16

45 g of 1,2 pentanediol and 5 g of gallic acid were mixed. Thus, an impregnation solution was obtained.

Preparation Example 17

45 g of the conductive polymer from Synthesis Example 1 and 5 g of dimethyl sulfoxide were mixed and the pH was adjusted to 3.0 using ammonia. Thus, a liquid composition which comprises an electrically conductive polymer was obtained.

Preparation Example 18

45 g of the conductive polymer from Synthesis Example 1 and 5 g of 1,3-butanediol were mixed and the pH was adjusted to 3.0 using ammonia. Thus, a liquid composition which comprises an electrically conductive polymer was obtained.

Example 1

Capacitors were produced the following way:
First anode bodies according to process step a) were prepared. Then, the anode bodies were processed according to process step b) using the liquid composition which comprises an electrically conductive polymer of Preparation Example 1. Next, the obtained capacitor bodies were impregnated according to process step c) using diethylene glycol as impregnation solution. Finally, the capacitor bodies were encapsulated according to process step d) and capacitors were obtained.
The capacitance of the capacitors was measured at 20°C and -55°C. The relative capacitance at -55°C was calculated according to the following formula:

$$(\text{relative capacitance at } -55°C) = (\text{capacitance at } -55°C)/(\text{capacitance at } 20°C)$$

Example 2-40:

Capacitors were produced and evaluated the same way as in Example 1, however, liquid compositions which comprise an electrically conductive polymer in process step b) and impregnation solutions in process step c) were used according to Table 1.
The relative capacitance at -55°C in % is given in Table 1.

Table 1: relative capacitance at -55°C of Examples 1-52

| | | impregnation solution | | | |
|---|---|---|---|---|---|
| | liquid composition | diethylene glycol | 1,3-propanediol | 1,3-butanediol | 1,5-pentanediol |
| Ex. 1-4 | Prep. Ex. 1 | 93% | 91% | 92% | 92% |
| Ex. 5-8 | Prep. Ex. 2 | 92% | 93% | 95% | 91% |
| Ex. 9-12 | Prep. Ex. 3 | 93% | 92% | 91% | 93% |
| Ex. 13-16 | Prep. Ex. 4 | 92% | 92% | 92% | 91% |
| Ex. 17-20 | Prep. Ex. 5 | 93% | 95% | 91% | 91% |
| Ex. 21-24 | Prep. Ex. 6 | 95% | 93% | 91% | 93% |

(continued)

| | | impregnation solution | | | |
|---|---|---|---|---|---|
| | liquid composition | diethylene glycol | 1,3-propanediol | 1,3-butanediol | 1,5-pentanediol |
| Ex. 25-28 | Prep. Ex. 7 | 92% | 91% | 93% | 93% |
| Ex. 29-32 | Prep. Ex. 8 | 93% | 94% | 92% | 91% |
| Ex. 33-36 | Prep. Ex. 9 | 93% | 93% | 94% | 93% |
| Ex. 37-40 | Prep. Ex. 10 | 95% | 91% | 93% | 92% |

Examples 41-53

Capacitors were produced and evaluated the same way as in Example 1, however, liquid compositions which comprise an electrically conductive polymer in process step b) and impregnation solutions in process step c) were used according to Table 2.

Additionally, the capacitance of the capacitors was measured at 20°C before and after a storage for 1000 hours at a storage temperature of 125°C. The relative capacitance after 1000 h storage at 125°C was calculated according to the following formula:

$$\text{(relative capacitance after 1000 h at 125°C)} = \text{(capacitance at 20°C after 1000 h storage at 125°C)}/\text{(capacitance at 20°C before 1000 h storage at 125°C)}$$

The relative capacitance at -55°C and relative capacitance after 1000 h at 125°C in % are given in Table 2.

Comparison Examples 1-5

Capacitors were produced and evaluated the same way as in Examples 41-53, however, liquid compositions which comprise an electrically conductive polymer in process step b) and impregnation solutions in process step c) were used according to Table 2.

Table 2: relative capacitance of Example 41-53 and Comparative Examples 1-5

| | liquid composition | impregnation solution | rel. capacitance at -55°C | rel. capacitance after 1000 h at 125°C |
|---|---|---|---|---|
| Ex. 41 | Prep. Ex. 5 | diethylene glycol | 93% | 90% |
| Ex. 42 | Prep. Ex. 5 | 1,2-propanediol | 92% | 81% |
| Ex. 43 | Prep. Ex. 5 | 1,3-propanediol | 95% | 91% |
| Ex. 44 | Prep. Ex. 5 | 50% 1,4-butandiol + 50% 1,3-propanediol | 90% | 91% |
| Ex. 45 | Prep. Ex. 5 | 1,2-pentanediol + 50% diethylene glycol | 93% | 90% |
| Ex. 46 | Prep. Ex. 5 | 2-methyl-2,4-pentandiol | 91% | 82% |
| Ex. 47 | Prep. Ex. 5 | 2,4-pentanediol | 86% | 82% |
| Ex. 48 | Prep. Ex. 5 | 1,4-pentanediol | 89% | 83% |

(continued)

| | liquid composition | impregnation solution | rel. capacitance at -55°C | rel. capacitance after 1000 h at 125°C |
|---|---|---|---|---|
| Ex. 49 | Prep. Ex. 5 | 1,2,4-butanetriol | 89% | 81% |
| Ex. 50 | Prep. Ex. 5 | Prep. Ex. 16 | 93% | 95% |
| Ex. 51 | Prep. Ex. 15 | 1,5-pentandiol | 91% | 97% |
| Ex 52 | Prep. Ex. 8 | dipropylene glycol | 86% | 84% |
| Ex 53 | Prep. Ex. 8 | diethylene glycol monoethyl ether | 85% | 81% |
| C. Ex. 1 | Prep. Ex. 5 | ethylene glycol | 91% | 51% |
| C. Ex. 2 | Prep. Ex. 1 | ethylene glycol | 91% | 55% |
| C. Ex. 3 | Prep. Ex. 5 | γ-butyrolactone | 59% | 65% |
| C. Ex. 4 | Prep. Ex. 1 | γ-butyrolactone | 63% | 66% |
| C. Ex. 5 | Prep. Ex. 1 | PEG-400 | 59% | 78% |

Example 54-58

Capacitors were produced and evaluated the same way as in Example 1, however, liquid compositions which comprise an electrically conductive in process step b) and impregnation solutions in process step c) were used according to Table 3. Shown in Table 3 is the relative capacitance at -55°C.

Table 4 relative in at -55°C of Example 54-58

| | | impregnation solution |
|---|---|---|
| | liquid composition | 1,5-pentanediol |
| Ex. 54 | Prep. Ex. 9 | 91% |
| Ex. 55 | Prep. Ex. 11 | 81% |
| Ex. 56 | Prep. Ex. 12 | 83% |
| Ex. 57 | Prep. Ex. 13 | 74% |
| Ex. 58 | Prep. Ex. 14 | 75% |

Comparison Example 6-19

Capacitors were produced and evaluated the same way as in Example 1, however, liquid compositions which comprise an electrically conductive in process step b) and impregnation solutions in process step c) used according to

Table 4. Shown in Table 4 is the relative capacitance at -55°C.

Table 5: relative capacitance at -55°C of Comparative Examples 6-19

| | | impregnation solution | |
|---|---|---|---|
| | liquid composition | PEG-400 | polyglycerol |
| Comp. Ex. 6-7 | Prep. Ex. 9 | 71% | 70% |
| Comp. Ex. 8-9 | Prep. Ex. 11 | 58% | 62% |
| Comp. Ex. 10-11 | Prep. Ex. 12 | 55% | 57% |
| Comp. Ex. 12-13 | Prep. Ex. 13 | 60% | 63% |
| Comp. Ex. 14-15 | Prep. Ex. 14 | 59% | 57% |
| Comp. Ex. 16-17 | Prep. Ex. 17 | 73% | 71% |
| Comp. Ex. 18-19 | Prep. Ex. 18 | 74% | 73% |

Comparison Example 20-25

Capacitors were produced and evaluated the same way as in Example 1, however, liquid compositions which comprise an electrically conductive in process step b) and impregnation solutions in process step c) used according to Table 5. For Comparison Example 20 and 23, process step c) was not applied, thus no impregnation solution was used. Shown in Table 5 is the relative capacitance at -55°C.

Table 5: relative capacitance at -55°C of Comparative Examples 20-25

| | | impregnation solution | | |
|---|---|---|---|---|
| | liquid composition | without | γ-butyrolactone | sulfolane |
| Comp. Ex. 20-22 | Prep. Ex. 13 | 49% | 63% | 65% |
| Comp. Ex. 23-25 | Prep. Ex. 14 | 52% | 56% | 58% |

**KEY TO REFERENCE NUMBERS**

1 porous electrode body
2 electrode material
3 dielectric
4 solid electrolyte
5 pore
6 impregnation solution
7 encapsulation (aluminium housing)
8 capacitor element (porous electrode material coated with dielectric and solid electrolyte and comprising the impregnation solvent)
9 rubber packing
10 lead wires

**Claims**

**1.** A method for manufacturing a capacitor, comprising the method steps:

a) provision of a porous electrode body (1) made of an electrode material (2), wherein a dielectric (3) at least partially covers a surface of this electrode material (2);
b) introduction of a liquid composition which comprises an electrically conductive polymer, at least one high-boiling solvent having a boiling point (determined at 1013.25 hPa) of at least 150°C and of not more than 275°C

and optionally a dispersing agent into at least a part of the porous electrode body (1) provided in process step a) and at least partial removal of the high-boiling solvent and, if present, of the dispersing agent for the formation of a solid electrolyte (4) that at least partially covers a surface of the dielectric (3);
c) filling at least a part of the pores (5) of the porous electrode body (1) obtained in process step b) with an impregnation solution (6) comprising at least one impregnation solvent, wherein the at least one impregnation solvent comprises at least one hydroxy group and has a molecular weight in the range from 70 to 180 g/mol;
d) encapsulation of the porous electrode body (1) obtained in process step c).

**2.** The method according to claim 1, wherein the electrically conductive polymer is poly(3,4-ethylenedioxythiophene) or derivative thereof.

**3.** The method according to claim 1 or 2, wherein the at least one high-boiling solvent has a molecular weight of less than 180 g/mol.

**4.** The method according to anyone of claims 1 to 3, wherein in process step b) at least 50 wt.-% of the total amount of high-boiling solvent is at least partially removed when forming the solid electrolyte (4).

**5.** The method according to anyone of claims 1 to 4, wherein the impregnation solution (6) has an ionic conductivity of less than 1000 $\mu$S/cm.

**6.** The method according to anyone of claims 1 to 5, wherein the at least one impregnation solvent is a mono, di- or tri alkylene glycol, a mono-, di- or tri alkylene glycol monoether, an alkanediol or an alkanediol monoether.

**7.** The method according to claim 6, wherein the alkanediol is selected from the group consisting of 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol, 2-methyl-2,4-pentanediol, 1,2-hexanediol, 1,3-hexanediol, 1,4-hexanediol, 1,5-hexanediol, 1,6-hexanediol, 2,3-hexanediol, 2,4-hexanediol, 2,5-hexanediol, 3,4-hexanediol, 1,2-heptanediol, 1,3-heptanediol, 1,4-heptanediol, 1,5-heptanediol, 1,6-heptanediol, 1,7-heptanediol, 2,3-heptanediol, 2,4-heptanediol, 2,5-heptanediol, 2,6-heptanediol, 3,4-heptanediol, 3,5-heptanediol, 1,2-octanediol, 1,3-octanediol, 1,4-octanediol, 1,5-octanediol, 1,6-octanediol, 1,7-octanediol, 1,8-octanediol, 2,3-octanediol, 2,4-octanediol, 2,5-octanediol, 2,6-octanediol, 2,7-octanediol, 3,4-octanediol, 3,5-octanediol, 3,6-octanediol and 4,5-octanediol.

**8.** The method according to anyone of claims 1 to 7, wherein the at least one impregnation solvent has a boiling point (determined at 1013.25 hPa) of more than 205°C.

**9.** The method according to anyone of claims 1 to 8, wherein the at least one impregnation solvent has a melting point of less than 15°C.

**10.** A capacitor comprising as components:

i) a porous electrode body (1) made of an electrode material (2), wherein a dielectric (3) at least partially covers a surface of this electrode material (2);
ii) a solid electrolyte (4) comprising an electrically conductive polymer, wherein the solid electrolyte layer at least partially covers a surface of the dielectric (3);
iii) an impregnation solution (6) that fills at least a part of the open pore volume of the porous electrode body (1), wherein the impregnation solution (6) has a conductivity of less than 1000 $\mu$S/cm and comprises at least one impregnation solvent, wherein the at least one impregnation solvent comprises at least one hydroxy group and has a molecular weight in the range from 70 to 180 g/mol;
iv) an encapsulation that encloses the porous electrode body (1); wherein the capacitor has

($\alpha$1) a decrease of the capacitance of at most 20 % on reducing the temperature from 20°C to -55°C, and
($\alpha$2) a decrease of the capacitance of at most 20 % after storage of the capacitor for 1000 hours at 125°C.

**11.** The capacitor according to claim 10, wherein the electrically conductive polymer is poly(3,4-ethylenedioxythiophene) or a derivative thereof.

**12.** The capacitor according to claim 10 or 11, wherein the at least one impregnation solvent is as defined in anyone of

claims 6 to 9.

**13.** The capacitor according to anyone of claims 10 to 12, wherein at least 50 vol-% of the open pore volume of the porous electrode body (1) are filled with the at least one impregnation solvent.

**14.** The use of capacitors according to any one of claims 10 to 13 or of a capacitor obtainable by the method according to anyone of claims 1 to 9 in electronic circuits.

**15.** An electronic circuit comprising capacitors according to any one of claims 10 to 13 or of a capacitor obtainable by the method according to anyone of claims 1 to 9.

Fig. 1

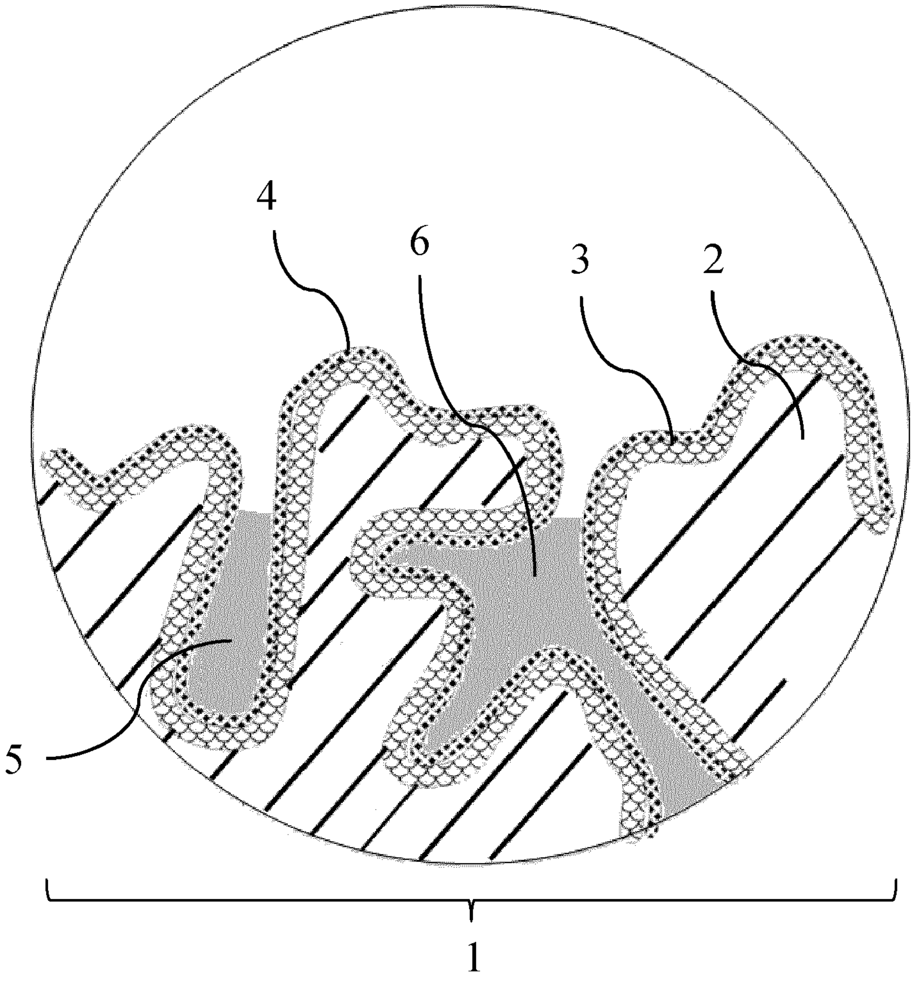

Fig. 2

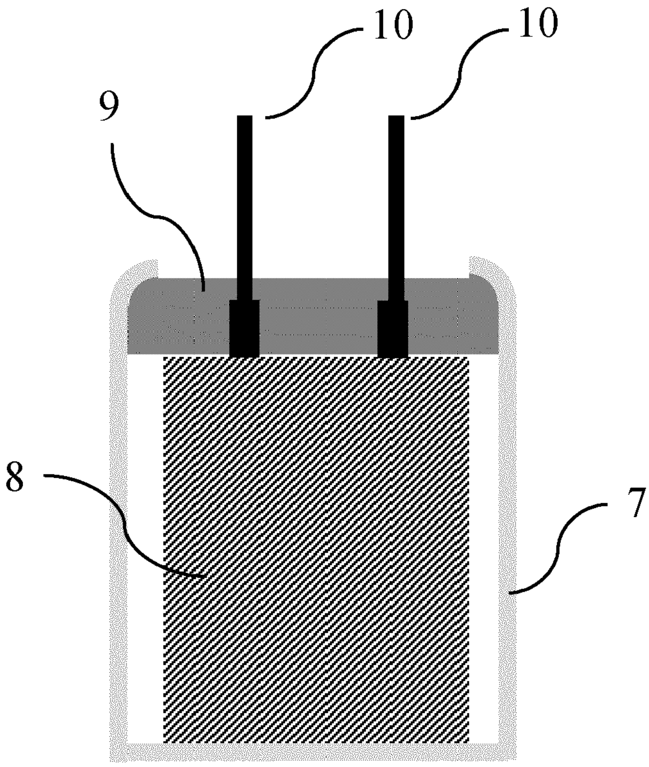

European Patent Office
Europäisches Patentamt
Office européen des brevets

# EUROPEAN SEARCH REPORT

Application Number
EP 20 16 7784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 270 092 A1 (TAYCA CORP [JP]) 5 January 2011 (2011-01-05) * paragraphs [0032], [0033], [0036]; claims 1, 4-6 * * the whole document * | 1-4 | INV. H01G9/00 H01G9/028 H01G9/035 H01G9/15 |
| X | US 2014/334066 A1 (SUGIHARA RYOSUKE [JP] ET AL) 13 November 2014 (2014-11-13) * paragraphs [0014] - [16;24;68;71] - paragraph [72;74;81;88;90] * * line 132 - line 133; 139; 170; claims 1, 6-9 * * the whole document * | 1-15 | |
| X | JP 2014 082392 A (TAYCA CORP) 8 May 2014 (2014-05-08) * paragraphs [0012] - [14;18;22;37;59] * * paragraph [69;170] - paragraph [0171]; claims 1-6 * * the whole document * | 1-15 | |
| X | JP 2016 021453 A (TAYCA CORP) 4 February 2016 (2016-02-04) * paragraph [45;209] - paragraph [0210]; claims 2, 12-14 * * the whole document * | 1-15 | TECHNICAL FIELDS SEARCHED (IPC) C08L C09D H01B H01G |

The present search report has been drawn up for all claims

| Place of search | Date of completion of the search | Examiner |
|---|---|---|
| Munich | 18 December 2020 | Dessaux, Christophe |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number

EP 20 16 7784

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 20 16 7784

The Search Division considers that the present European patent application does not comply with the requirements of unity of invention and relates to several inventions or groups of inventions, namely:

1. claims: 2-4(completely); 1(partially)

   A method for manufacturing a capacitor, the method being characterized in that a solid electrolyte is formed on a porous electrode through the application of a liquid solution of a conductive polymer in a solvent having a boiling point determined at 1013.25 hPa of at least 150°C and of not more than 275°C.

   ---

2. claims: 5-9(completely); 1(partially)

   A method for manufacturing a capacitor, the method being characterized in that the solid electrolyte is formed on a porous electrode is impregnated with an impregnation solution comprising at least one impregnation solvent, wherein the at least one impregnation solvent comprises at least one hydroxy group and has a molecular weight in the range from 70 to 180 g/mol.

   ---

3. claims: 10-15

   A capacitor comprising a porous electrode body, a solid electrolyte, an impregnation solution and an encapsulation porous electrode body characterized in that:
   the capacitor has
   - a decrease of the capacitance of at most 20% on reducing the temperature from 20°C to -55°C and
   - a decrease of the capacitance of at most 20% after storage of the capacitor for 1000 hours at 125°C.

   ---

# ANNEX TO THE EUROPEAN SEARCH REPORT ON EUROPEAN PATENT APPLICATION NO. EP 20 16 7784

This annex lists the patent family members relating to the patent documents cited in the above-mentioned European search report. The members are as contained in the European Patent Office EDP file on
The European Patent Office is in no way liable for these particulars which are merely given for the purpose of information.

18-12-2020

| Patent document cited in search report | Publication date | Patent family member(s) | Publication date |
|---|---|---|---|
| EP 2270092 A1 | 05-01-2011 | CN 101932653 A | 29-12-2010 |
| | | EP 2270092 A1 | 05-01-2011 |
| | | JP 4454042 B2 | 21-04-2010 |
| | | JP WO2009131012 A1 | 18-08-2011 |
| | | KR 20100068495 A | 23-06-2010 |
| | | TW 200952013 A | 16-12-2009 |
| | | US 2010284129 A1 | 11-11-2010 |
| | | WO 2009131012 A1 | 29-10-2009 |
| US 2014334066 A1 | 13-11-2014 | CN 104040658 A | 10-09-2014 |
| | | CN 105551801 A | 04-05-2016 |
| | | JP 5259895 B1 | 07-08-2013 |
| | | JP WO2013094462 A1 | 27-04-2015 |
| | | KR 20140107201 A | 04-09-2014 |
| | | TW 201342409 A | 16-10-2013 |
| | | US 2014334066 A1 | 13-11-2014 |
| | | WO 2013094462 A1 | 27-06-2013 |
| JP 2014082392 A | 08-05-2014 | JP 6180010 B2 | 16-08-2017 |
| | | JP 2014082392 A | 08-05-2014 |
| JP 2016021453 A | 04-02-2016 | JP 6462255 B2 | 30-01-2019 |
| | | JP 2016021453 A | 04-02-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102005043828 A
- WO 2007097364 A
- JP 2008109065 A
- JP 2008109068 A
- JP 2008109069 A
- US 7497879 B2
- JP 2009111174 A
- WO 2012041507 A1
- EP 1798259 A1
- EP 1043720 A1
- WO 2008055834 A1
- WO 2014048562 A
- US 20150337061 A
- WO 2010003874 A2
- WO 2009141209 A1
- EP 0447165 A2

### Non-patent literature cited in the description

- *Römpp Chemie,* 1999, 4391
- **HOUBEN WEYL.** Methoden der organischen Chemie, Vol. E 20 Makromolekulare Stoffe. *Methods of Organic Chemistry, Macromolecular Substances,* 1987, vol. E 20, 1141